Europäisches Patentamt

European Patent Office

Office européen des brevets

(11) Publication number: **0 087 952**
**B1**

# EUROPEAN PATENT SPECIFICATION

(45) Date of publication of patent specification: **11.10.89**

(51) Int. Cl.⁴: **G 11 B 15/66**, G 11 B 15/10

(21) Application number: **83301013.5**

(22) Date of filing: **25.02.83**

(54) Magnetic tape recording and/or reproducing apparatus.

(30) Priority: **25.02.82 JP 29324/82**
**25.02.82 JP 29325/82**
**25.02.82 JP 29326/82**
**03.03.82 JP 33611/82**

(43) Date of publication of application:
**07.09.83 Bulletin 83/36**

(45) Publication of the grant of the patent:
**11.10.89 Bulletin 89/41**

(84) Designated Contracting States:
**DE FR GB**

(56) References cited:
**EP-A-0 028 928**
**EP-A-0 071 975**
**DE-A-3 104 147**
**FR-A-2 477 748**
**GB-A-2 094 542**
**US-A-4 138 699**

(73) Proprietor: **Matsushita Electric Industrial Co., Ltd.**
**1006, Oaza Kadoma**
**Kadoma-shi Osaka-fu, 571 (JP)**

(72) Inventor: **Saito, Fuminari**
**5-6-1208, Hanazono-cho Kuzuha**
**Hirakata-shi Osaka-fu (JP)**
Inventor: **Kajino, Kirou**
**407-22, Oaza-Uzumasa**
**Neyagawa-shi Osaka-fu (JP)**
Inventor: **Kanchiku, Hiroshi**
**22-7, Korinishino-cho**
**Neyagawa-shi Osaka-fu (JP)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

This invention relates to a magnetic tape recording and/or reproducing apparatus of an automatic tape-loading/unloading type, such as a video tape recorder, and more particularly to an apparatus having a mechanism utilizing rotation of a motor for changing an operating mode of the apparatus, and for drawing the tape out of the rewinding tape within a cassette.

A magnetic tape recording and/or reproducing apparatus, such as a caseette type video tape recorder, has already been proposed, which draws the magnetic tape out of the cassette and winds the tape around a predetermined angle of a guide drum positioned outside the cassette and carrying a magnetic head, the apparatus often being provided with a motor which is exclusively used to mechanically simplify the tape draw-out operation. Such a video tape recorder has been constructed to directly transfer the rotation of motor so that a magnetic tape drawing-out member is reciprocated between a first position where the magnetic tape housed within the cassette can be drawn out therefrom and a second position where the magnetic tape is drawn out from the cassette and wound at the predetermined angle and the guide frame. In order to accurately perform recording/reproducing of a signal at the second position, a stop for the magnetic tape draw-out member is disposed at the second position. The position of the stop for the second position of the magnetic tape draw-out member improves the accuracy of the winding angle and the member is stably fixed. A spring is interposed between the magnetic tape draw-out member and a drive unit so as to bias the magnetic tape draw-out member into engagement with the stop. In such a construction, however, the spring extends by an amount after the abutment of the draw-out member against the stop which amount depends upon the rotational stopping position of the motor, so that especially when the spring constant is enlarged for increasing the bias force, the actual biasing force against the stop is largely problematical. Also, it has been necessary in order to stabilize the member, to considerably increase the bias force and the required torque of motor, which has usually hindered miniaturization of motor and reduction in power consumption.

Recently, a construction which has low manufacturing cost and results in a lightweight product has been proposed which changes the operation of the apparatus by use of the motor for drawing out the magnetic tape. Such a construction, for example, is disclosed in Japanese Patent Application No. SHO 55—15263. In this construction, when the magnetic tape draw-out member is biased to abut the stop, the reaction to the biasing force of spring introduces loads on the changing operation which causes a large current flow in the motor and also increases friction between parts e.g., a cam groove and a cam follower in the aforesaid Patent Application, resulting in the switching operation being unstable with poorer reliability.

This construction also uses a motor rotating in one direction to switch the tape from a stopping mode to a fast-forward-winding mode and rotating in the reverse direction to switch the tape vice versa, but the speed of the motor is reduced for normal operation. Therefore, it takes much time to transfer the motor rotation during a change from the fast-forward-winding mode to the stopping mode so that the tape, even when the vicinity of the end of tape is optically detected, may reach the end thereof, thereby creating a grave problem of generating excessive tension on the tape. Furthermore, such construction often uses a cam for the mode changing operation, the cam being limited in size or pressure angle so that a sufficient stroke is not obtainable for exerting a braking action on real turntables. Thus, the accuracy of each part and adjustment at assembly have to be strictly supervised. Recently, magnetic recording and/or reproducing apparatus have tended to have various functions, such as a quick motion reproduction or slow motion reproduction, but it is difficult to provide such functions by changing the direction and speed of rotation of the motor and exert a braking force exactly in response to the mode changing operation; in particular a braking action cannot be switched in when drawing tape out of the cassette. For this reason, a solenoid has usually been used at the sacrifice of the weight and the manufacturing cost.

US—A—4138699 discloses an automatic loading type recording and/or reproducing apparatus including a motor which operates in one direction only. A gear is rotated by the motor in response to the operation of the play button from a first position to a new position which sets in train the rotation of levers which operate to draw the tape out of its cassette. Motion is transmitted from the gear to the levers by various members which constitute drive means. The levers are urged in the loading direction under the force of a spring and the gear is locked in its new position by the action of a circular cam and a roller. Once locked, the gear becomes disengaged from the motor. When the locking means locks the gear, the gear is subject to the reaction force of the spring and thus this arrangement suffers from some of the disadvantages described above.

The present invention provides a magnetic tape recording and/or reproducing apparatus for recording and/or reproducing signals on a magnetic tape wound on reels contained in a tape cassette and having a plurality of operating modes, comprising: means for recording and/or reproducing signals on/from said magnetic tape moving in a specific tape path outside of said tape cassette; a motor; a pair of reel drive turntables engageable with said reels for rotating said reels; loading means for moving from an inoperative position to an operative position to draw said magnetic tape out of said tape cassette and load magnetic tape in said specific tape path, and for returning from said operative position to said inoperative position; operating mode changing means having at least one rotatable disc driven by said motor for rotating to a plurality of positions to change the operating mode of said apparatus to said plurality of operating modes corresponding to said plurality of positions; resilient means exerting a force on said loading means to urge said loading means firmly into said operative position, said resilient means producing an opposite reaction force to the force exerting on said loading means; and driving means engageable with said rotatable disc and engaged with said loading means for moving said loading means between said inoperative and operative positions, said driving means normally transmitting said opposite reaction force produced by said resilient means to said rotatable disc,

characterized in that said motor is a reversible motor rotatable in a first direction and a second direction reverse to the first direction, and said loading means is driven by the first direction rotation of said motor for moving from said inoperative position to said operative position and driven by the second direction rotation of said motor for moving from said operative position to said inoperative position, and

that said apparatus further comprises locking means for locking, when said driving means is in a position corresponding to said operative position of said loading means, said driving means so that said opposite reaction force is not transmitted to said rotatable disc and so that said rotatable disc is rotatable to perform the operating mode changing operation without being affected by said opposite reaction force.

Thus, the rotatable disc is rotatable to perform the mode changing operation even when the driving means is locked.

An advantage of the invention is that a magnetic tape recording and/or reproducing apparatus is provided which uses a single motor for drawing tape out of, and rewinding tape within a cassette and for changing an operating mode; is capable of reliably positioning of magnetic tape drawing out members, and is also capable of effecting smooth mode changing with only a light load.

Another advantage is that the apparatus is capable of quickly and smoothly drawing magnetic tape out of and rewinding tape within the cassette.

Another advantage of the invention is that the apparatus is capable of effecting a reliable braking operation against reel turntables for various operating modes and hence does not require a solenoid.

A feature of the apparatus is that it uses a motor of novel construction which has integral reduction gears, is of small overall size, small in thickness, easy to assemble, and capable of stabilizing the position of an operating member during the mode changing operation.

The apparatus preferably allows a tape tension control member at the tape feed side to operate exactly following the mode changing operation.

In order that the present invention be more readily understood an embodiment thereof will now be described by way of example with reference to the accompanying drawings, in which:—

Fig. 1a is a top view of a principal portion of an embodiment of a magnetic tape recording and/or reproducing apparatus in a stopping mode,

Fig. 1b is a top view of a principal portion of the Fig. 1 embodiment in a reproduction or recording mode,

Fig. 1c is a top view of the principal portion of the same in a fast reviewing mode,

Fig. 2 is a schematic sectional view of a relay driving system,

Fig. 3 is a bottom view of the principal portion of the Fig. 1 embodiment,

Fig. 4 is a schematic sectional view of a drive unit in an operation switching means used in one embodiment of the magnetic recording and/or reproducing apparatus of the invention,

Figs. 5a, 5b, 5c and 5d are enlarged detail views explanatory of operation of a drive means for a tape draw-out means of the magnetic tape recording and/or reproducing apparatus of the invention,

Fig. 6 is a schematic sectional view of a drive means for the tape draw-out means,

Figs. 7a, 7b and 7c are bottom views explanatory of operation of a brake control member, showing the principal portion of the magnetic tape recording and/or reproducing apparatus of the invention in a stopping mode, a cue play mode, and a fast reviewing mode,

Fig. 8 is a sectional view explanatory of an engaging and releasing means for the brake control member,

Figs. 9a, 9b and 9c are enlarged detail views explanatory of operation of a tension lever used in the magnetic tape recording and/or reproducing apparatus of the invention,

Fig. 10 is a schematic sectional view of a tension lever operating system, and

Fig. 11 is a cam chart of grooved cams in first and second rotatable discs in the magnetic tape recording and/or reproducing apparatus of the invention.

Detailed description of the preferred embodiment

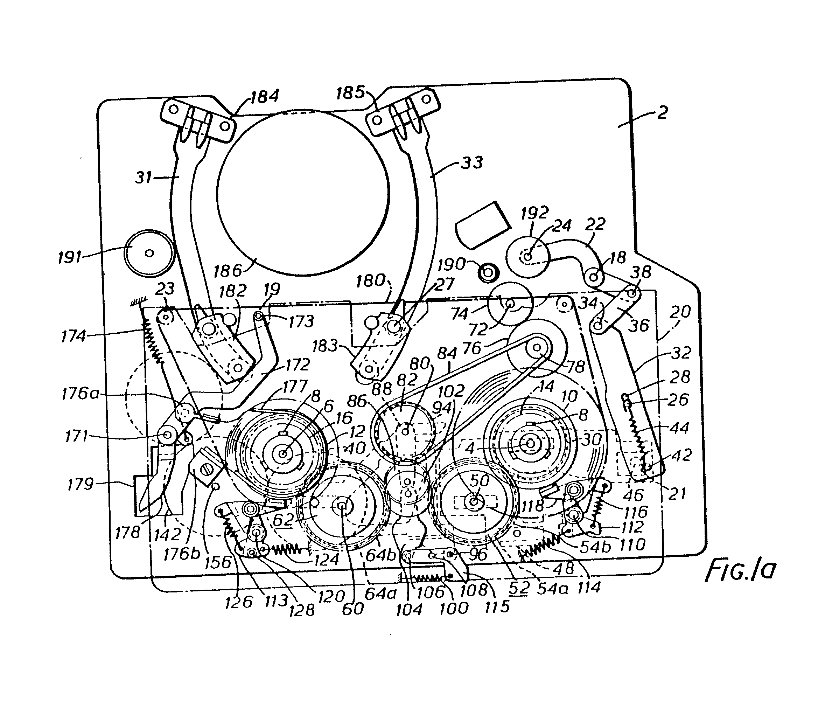

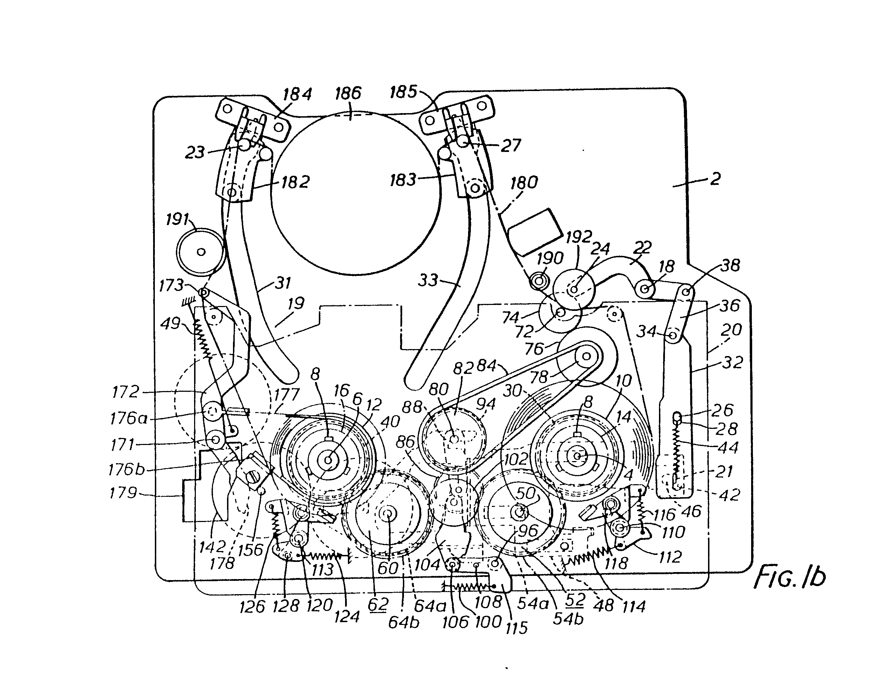

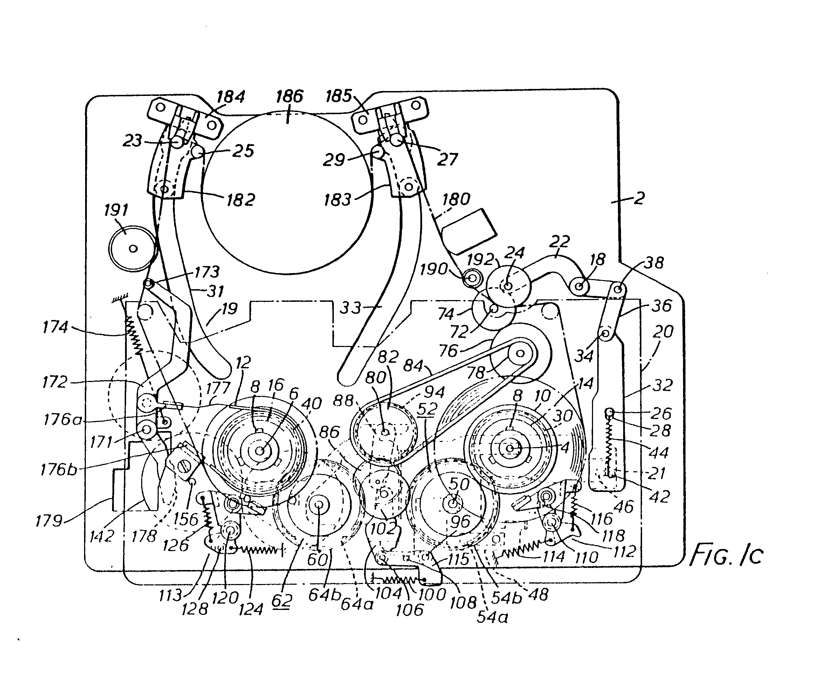

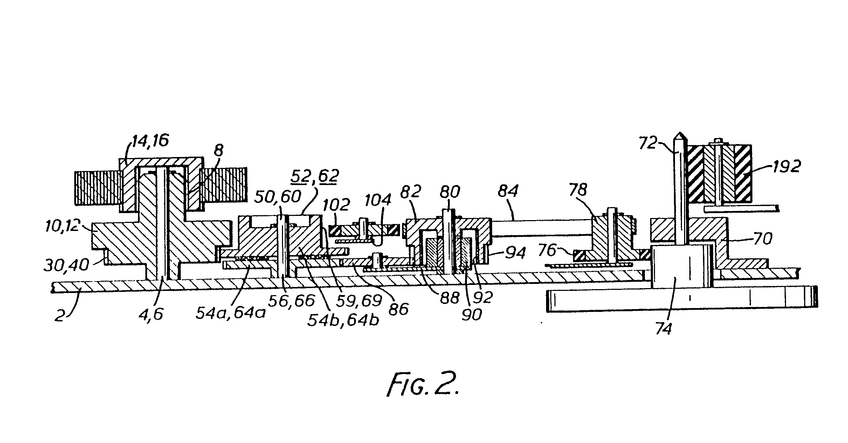

Figs. 1a, 1b and 1c are top views of the embodiment of the invention, in which a take-up reel turntable 10 and a supply reel turntable 12 are fitted freely rotatably onto shafts 4 and 6 provided upright on the upper surface of a chassis 2 and engage with a take-up reel hub 14 and a supply reel hub 16 within a cassette 20 when mounted at the predetermined position, thereby rotating integrally with the reel hubs 14 and 16 through pawls 8 provided at the reel turntables 10 and 12 respectively. Fig. 2 is a sectional view of a reel turntable driving system, in which the take-up reel turntable 10 and supply reel turntable 12 have reel gears 30 and 40 respectively, the reel gears 30 and 40 being rotatably driven in engagement with a take-up reel idler gear unit 52 and a suppl reel idler gear unit 62 which are fitted freely rotatably onto shafts 50 and 60 mounted upright onto the chassis 2. The take-up reel idler gear unit 52 and supply reel idle gear unit 62, as shown in Fig. 2, are adapted to transfer rotations of a take-up reel idler gear 54a and a supply reel idler gear 64a to a take-up reel idler gear 54b and a supply reel idler gear 64b which are engageable with the reel gears 30 and 40 through friction members 56 and 66, such as felt material, respectively.

A capstan 72 is pivotally supported to a bearing unit 70 fixed on the chassis 2 and has at a portion a roller 74 so that the roller 74 transfers its rotation to a main idler 76 in press-contact with the roller 74 under the predetermined press-contact strength, the main idler 76 transferring its rotation to a relay roller 82 fitted rotatably onto a shaft 80 mounted on the chassis 2, through a belt 84 stretched across the relay roller 82 and a pulley 78 integral with the main idler 76. A turnable arm 88 pivotally supporting at one end thereof a rotatable idler gear 86 is fitted onto the shaft 80 and a magnet multi-polar-magnetized at the outer periphery is fitted onto the shaft 80 about concentrically and integrally therewith. At the inner periphery of relay roller 82 is fixed a magnetic material 92 of magnetic hysteresis and opposite to the magnet 90 across the predetermined interval so that the predetermined attraction is generated between the magnetic material 92 and the magnet 90 to apply to the turnable arm 88 a rotating force in the same direction as the relay roller 82. Also, the idler gear 86 is adapted to always engage with a gear portion 94 provided at the relay roller 82 and engage with the take-up reel idler gear 54a or supply reel idler gear 64a by rotation of relay roller 82 corresponding to an operating mode of apparatus, thereby selectively transferring the rotation of capstan 72 to the take-up reel turntable 10 or supply reel turntable 12 corresponding to the direction of rotation of capstan 72.

A lever 115 is fitted rotatably onto a shaft 96 mounted on the chassis 2, is biased clockwise by a tension spring 100, and pivotally supports, at one end and through a shaft 106, a relay lever 104 carrying a rotatable idler tire 102, the shaft 106 and pin 108 mounted to the lever 115 extending to the rear surface of chassis 2 and capable of abutting against a main rod 48 and a sub-rod 130 to be discussed below. Furthermore, the idler tire 102 has a guide (not shown) through which the take-up reel idler gear unit 52 and supply reel idler gear unit 62 are positioned at about equal distances from the tire 102 in stopping mode. Since the idler tire 102, as well-known, rotates to exert the braking action, when the main rod 48 and sub-rod 130 move to be released frm the shaft 106 and pin 108, the lever 115 turns to allow the idler tire 102 to abut against the rear surface of belt 84 and enter between the roller 59 integral with the take-up reel idle gear 54b and the belt 84, or between the roller 69 integral with the supply reel idler gear 64b and the belt 84, corresponding to the transportation direction of belt 84, thereby transferring the rotation of capstan 72 not through the clutch means but selectively to the take-up reel turntable 10 and or supply reel turntable 12 corresponding to a fast-forward-winding mode or rewinding mode, at which time the idler gear 86, regardless of rotation of relay roller 82, is adapted to be positioned apart at about equal distances from the take-up idler gear 54a and supply reel idler gear 64a by use of a control member (not shown), thereby rotatably contacting with neither the reel turntable 10 nor 12.

A pinch roller lever 22 is fitted rotatably onto a shaft 18 mounted on the chassis 2 and a pinch roller 192 is supported rotatably to a shaft 24 mounted at one end of pinch roller lever 22. A press-contact lever 32 having a slot 28 is fitted rotatably and lengthwise slidably onto a shaft 26 mounted on the chassis 2, a connecting arm 36 being fitted at one end rotatably onto a pin 34 mounted on one end of press-contact lever 32 and at the other end rotatably onto a pin 38 mounted on the other end of pinch roller lever 22. A spring seat 42 is formed at the other end of press-contact lever 32 and a tension spring 44 is carried between the shaft 26 and the spring seat 42 so that the press-contact lever 32 is biased upwardly in Fig. 1a and the shaft 26 abuts against the end of slot 28, in other words, the pinch roller lever 22, connecting arm 36, and press-contact lever 32 constituting the so-called toggle mechanism. Also, a pin 46 at the other end of press-contact lever 32 is adapted to perforate toward the rear surface of apparatus through a bore (not shown) provided at the chassis 2 and abut against a bent portion 21 provided at the main rod 48 to be discussed below. Hence, when the main rod 48 shown by the broken line in Fig. 1a moves leftwardly, the press-contact lever 32 turns clockwise due to the abutting of bent portion 21 against pin 46, whereby the pinch roller lever 22 turns counterclockwise until the pinch roller 192 abuts against the capstan 72. Thereafter, the pinch roller lever 22 does not further turn, but the pinch roller 192 is kept in press-contact with the capstan 72 under the predetermined strength as shown in Fig. 1b because the press-contact lever 32 still continues the clockwise turn so as to move downwardly against the tension spring 44 and through the guidance of slot 28.

A brake 112 at the take-up reel side and that 113 at the supply reel side are fitted rotatably onto shafts 110 and 120 mounted onto the chassis 2 and biased clockwise and counterclockwise in Fig. 1a by tension springs 114 and 124 respectively. The brakes in this embodiment, as well-known, are of double-acting construction, which is adapted to adjust the braking effect when the tension springs 116 and 126 tend to bite the reel turntables 10 and 12 respectively. Reference numerals 118 and 128 designate kick pins mounted on the take-up reel side brake 112 and supply reel side brake 113 and extending toward the rear surface of chassis 2, the kick pins 118 and 128 being pushed leftwardly in Fig. 1a by the main rod 130 to be discussed below, thereby moving away from the both reel turntables 10 and 12 to release the braking effect.

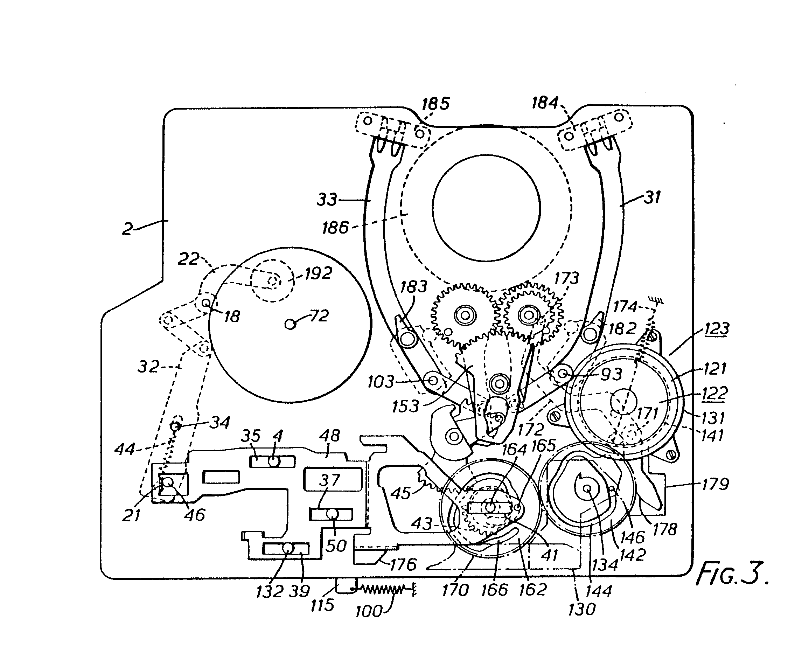

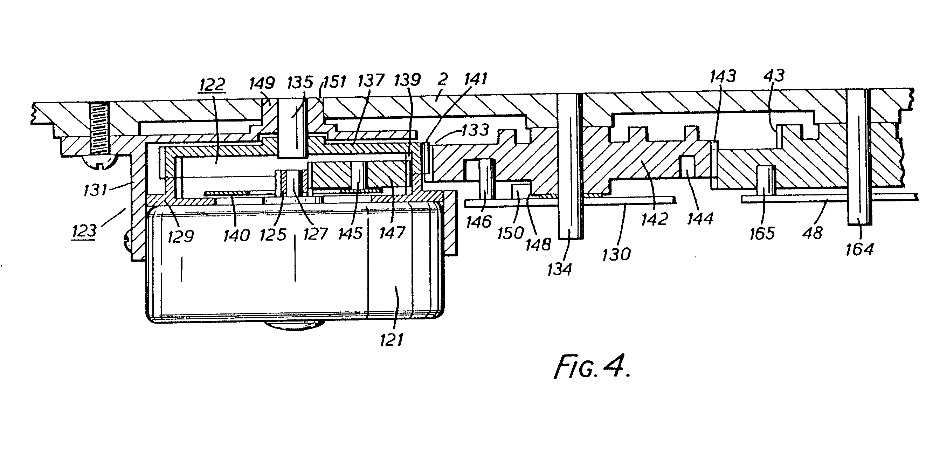

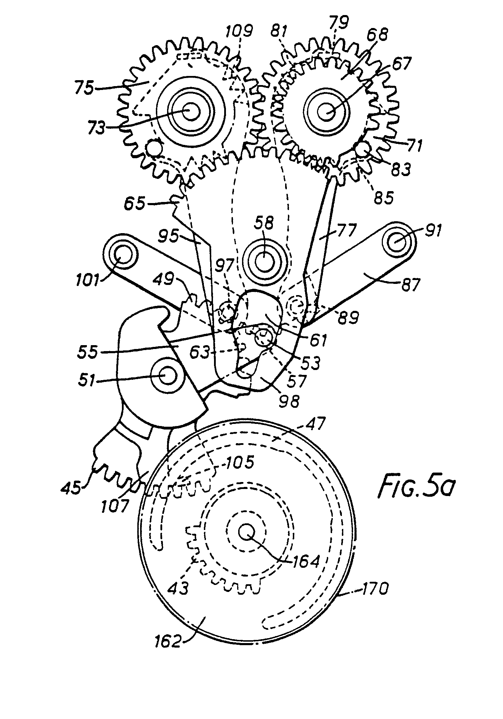

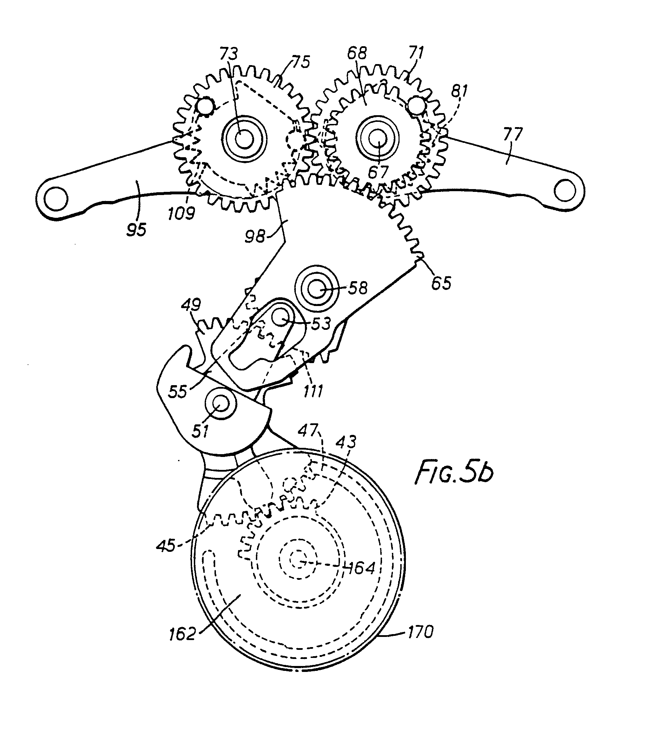

Referring to Fig. 3, at the rear surface of chassis 2 is disposed a drive unit 123 having a transfer means 122 integral with a motor 121 so as to reduce the rotational speed of motor 121 and take out it as a large rotational output. Fig. 4 is a sectional view of the drive unit 123, in which reference numeral 125 designates a pinion press-fitted onto an output shaft 127 of motor 121, 129 designates an internal gear fixed to the upper surface of motor 121, 137 designates a driving gear having at the inner periphery a movable internal gear 139 and at the outer periphery an external gear 141 of spur gear, the driving gear 137 being fitted rotatably onto a shaft 135 mounted at the center of a housing 131 which fixes the motor 121 at the outer periphery thereof and has an opening 133 at the outer peripheral side surface of housing 131, and 147 designates a planetary gear supported rotatably mounted to a shaft 145 mounted on a retainer 140, three planetary gears 147 of the same construction being disposed at the circumferentially triset positions of retainer 140 respectively. The planetary gears 147 each are engageable with the pinion 125 and also with the fixed internal gear 129 and internal gear 139 at gpe drive gear 137, and the fixed internal gear 129 has the teeth smaller by three in number than the movable internal gear 139 so as to construct the so-called planetary differential gear train, thereby making it possible to obtain a large reduction gear ratio of 1/100 to 1/300. Thus, the drive gear 137 exposed from the opening 133 is transmitted with rotation reduced at speed and in the same direction as the rotation of pinion 125. The external gear 141 at the drive gear 137 engages through the opening 133 with a first rotatable disc 142 which is supported rotatably to a shaft 134 mounted on the chassis 2 and has a toothed portion 143 of spur gear, and the housing 131 has the shaft 135 for the drive gear 137 and fits a boss 149 easily concentrical with the shaft 135 into a bore 151 formed at the chassis 2, thereby being fixed thereto. Hence, the relative position of the bore 151 to the support shaft 134 of first rotatable disc 142 is defined to allow the external gear 141 and toothed portion 143 at the first rotatable disc to be set of a distance between the centers thereof with accuracy.

Thus, the transmission mechanism is integral and the output is taken out from the side, thereby being extremely easy to assemble as well as the apparatus is convenient to be small-sized and reduced in thickness. Also, the output taken out from the spur gear facilitates engagement with the first rotary disc 142 and the reduction gear train of relatively large gear ratio is housed and has the effect the same as provision of the so-called self-locking mechanism, thereby stably positioning the operating members corresponding to the respective operation modes to be discussed below, especially being suitable for portable use because of durability against external vibrations.

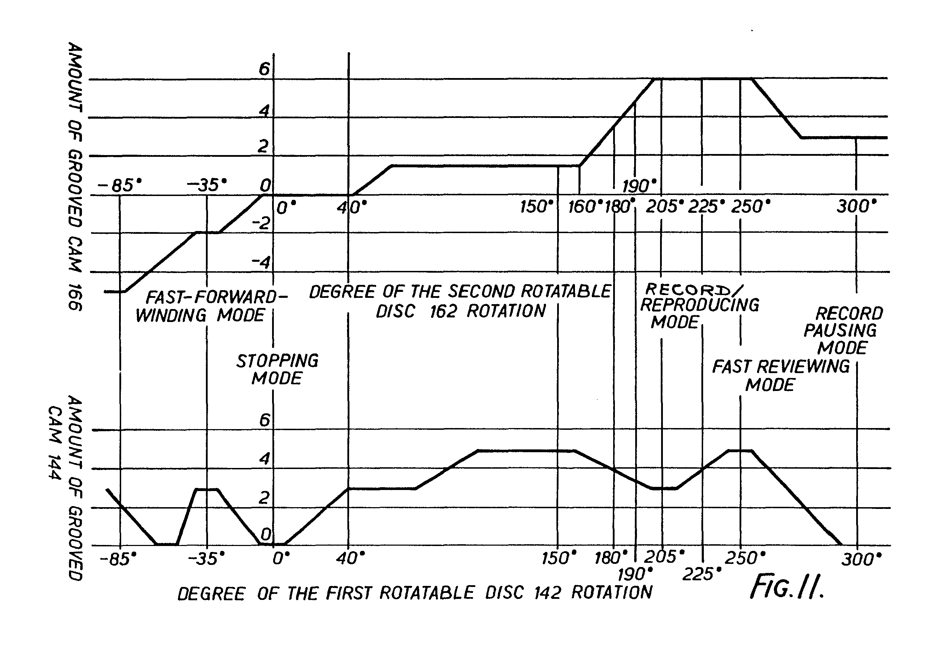

In Fig. 3, the first rotatable disc 142 engages with a second rotatable disc 162 having at the outer periphery a toothed portion 170 of the same diameter and the same number of teeth as the disc 142, the second rotatable disc 162 being supported to a shaft 164 mounted upright on the chassis 2 and has at one side a positive cam of grooved cam 166 extending at an angle of 360° or more as shown in Fig. 11, the lifting curve of cam 166, as shown in Fig. 11, being adapted to move a cam follower 165 to be discussed below, only in a range where a lifting amount changes. Also, at the rear surface of chassis 2 are provided the shaft 4 of take-up reel turntable 10 and that 50 of take-up reel idler gear unit 52, which extend from the upper surface of chassis 2, a shaft 132 and a rotary shaft 164 of second rotatable disc 162 are mounted upright, and the main rod 48 having the cam follower 165 engageable with the groove cam 166 at the second rotatable disc 162 and mounted movably in reciprocation along guide grooves 35, 37, 39 and 41.

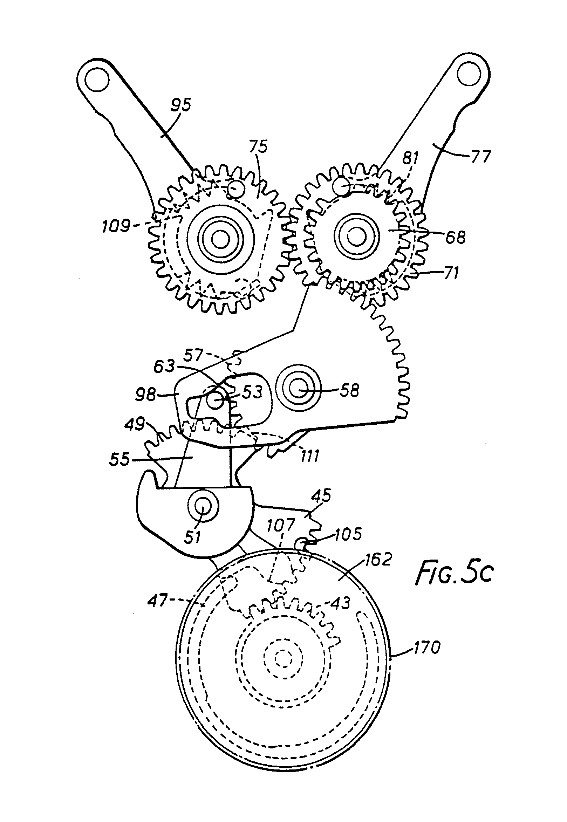

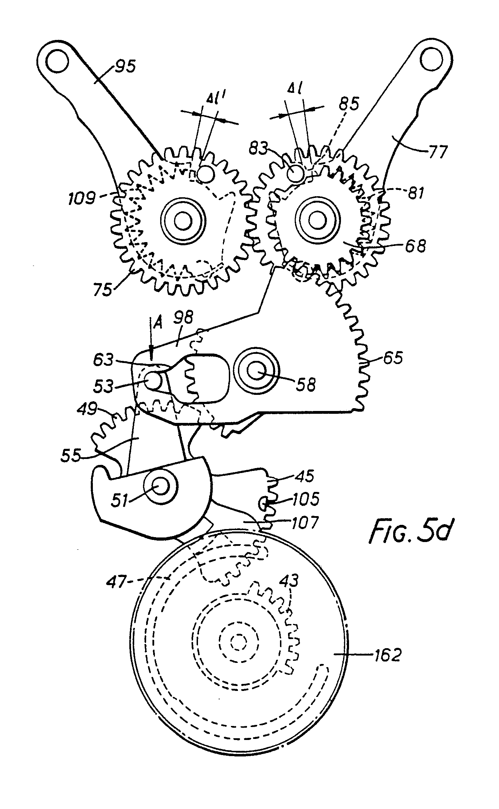

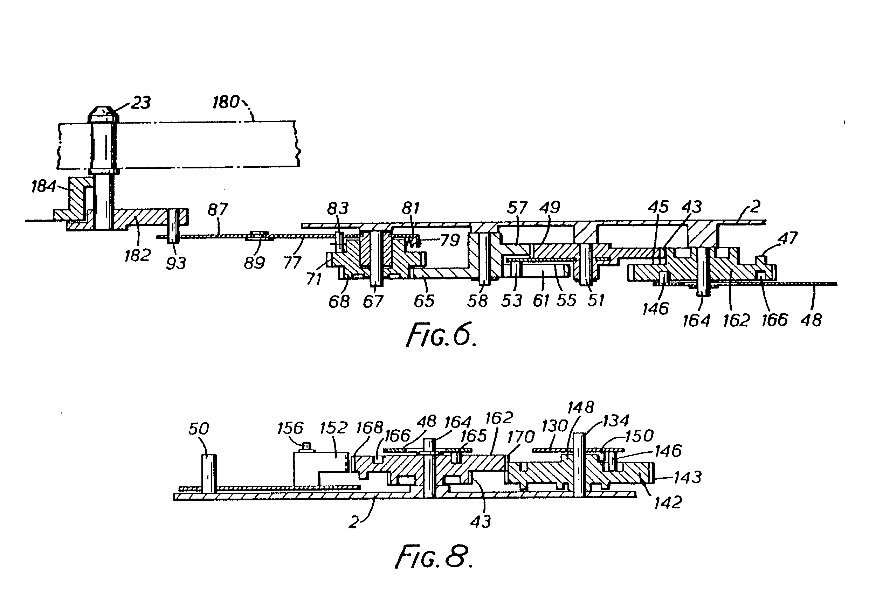

The second disc 162 has a partial gear 43 at the other side where the groove cam 166 is not provided, the partial gear 43 having the regular phase relation with the grooved cam 166. The second rotatable disc 162, when rotating clockwise at the predetermined angle from the stopping mode shown in Fig. 3, engages with a first sector gear 45 having a gear portion to move supports 182 and 183 as discussed below. Here, referring to Figs. 5a through 5d and Fig. 6, detail explanation will be given on a mechanism and operation such that the support members 182 and 183 move from the stopping mode in Fig. 1a to the reproducing mode in Fig. 1b, in which guide posts 23 and 27 mounted on the support members 182 and 183 come into press-contact with positioning members 184 and 185. Fig. 5a shows a positional relation of the driving mechanism in the stopping mode, in which reference numeral 45 designates a first sector gear engageable with the partial gear 43, fitted rotatably onto the shaft 51 at the chassis 2, and integral with a second sector gear 49, 55 designates an arm integral with the first sector gear 45 and a second sector gear 49 and having at the utmost end a pressure pin 53, 57 designates a third sector gear having a geared portion and fitted rotatably onto a shaft 58 mounted on the chassis 2, 98 designates an arm having a bore 61 of cam face 63, the bore 61 extending as shown to allow the cam face 63 to abut against the pressure pin 53, 65 designates a fourth sector gear having a geared portion integral with the third sector gear 57 and arm 98 and rotatable around the shaft 58, and engaging with a first loading gear 68 rotatable around a shaft 67 mounted on the chassis 2, 71 designates a second loading gear integral with the first loading gear 68 and rotatable around the shaft 67, the second loading gear 71 engaging with a third loading gear 75 fitted rotatably onto a shaft 73 and rotating in synchronism with the gear 75, and 77 designates a first arm for leftward loading, which is fitted rotatably onto the shaft 67. A tension spring 81, as shown in Figs. 5a and b, is stretched between a spring seat 79 provided at the first arm 77 for leftward loading and a pin 83 mounted on the second loading gear 71, so that the pin 83 abuts against a stopper 85 provided at the first arm 77 to allow the first arm 77 and second loading gear 71 to rotate integrally with each other. A second arm 87 for leftward loading is connected at one end rotatably to the end of the first arm 77 through a pin 89 and bore 91 at the other end, the bore 91 being engageable with a pin 93 mounted on the support member 182. Reference numeral 95 designates a first arm for rightward loading, which is of the same construction with respect to the third loading gear 75 as between the first arm 77 for leftward loading and the second loading gear 71, thus being integral with the third gear 75. The arm 95 also connects at one end rotatably with a second arm 99 for rightward loading through a pin 97, a bore 101 at the other end of the second arm 99 being engageable with a pin 103 mounted on the support member 183. A guide wall 47, as shown in Fig. 6, is provided at the other side of second rotatable disc 162 and adapted to be put between a first projection 105 and a second projection 107, provided at the first sector gear 45 in the stopping mode shown in Fig. 5a, whereby the first sector gear 45 is held in the position as shown in Fig. 5a. When the second rotatable disc 162 starts to rotate clockwise from the position in Fig. 5a, the partial gear 43, at a rotary angle of 40° in the Fig. 11 cam chart, starts to engage with the first sector gear 45 and the guide wall 47 disengages from the first and second projections 105 and 107, so that the first and second sector gears 45 and 49 begin to rotate counterclockwise, and the third and fourth sector gears 57 and 65 rotate clockwise. Hence, the first loading gear 68, second loading gear 71, and a first arm 77 for leftward loading, rotate counterclockwise and the third loading gear 75 and first arm 95 for rightward loading rotate clockwise, resulting in that the support members 182 and 183 start movement along guide grooves 31 and 33 respectively. Fig. 5b shows the second rotatable disc 162 in condition of having rotated at an angle of 105°, in which the gear train comprising the partial gear 43, first loading gear 68, second loading gear 71, and third loading gear 75, operates to move the support members 182 and 183 at about uniform speed. Fig. 5b shows the second rotatable disc 162 in condition of having rotated at 160°, in which the second sector gear 49 disengages from the third sector gear 57 and the pressure pin 53 starts to contact with the cam face 63 at the arm 98 and also the first arm 77 for leftward loading and first arm 95 for rightward loading have moved the support members 182 and 183 to the positions where the guide posts 23 and 27 thereof abut against the position members 184 and 185 respectively. Further, when the second rotatable disc 162 rotates clockwise from the position in Fig. 5c, the first sector gear 45 rotates counterclockwise, and since the second sector gear 49 disengages from the third sector gear 57, the pressure pin 53 pushes the cam face 63 to allow the arm 98 to rotate continuously clockwise.

As seen from the above, since the tape guide posts 23 and 27 abut against the positioning members 184 and 185 respectively, the first arm 77 for leftward loading and first arm 95 for rightward loading, cannot turn further than the condition in Fig. 5c. As a result, the first loading gear 68 and third loading gear 75 continue to rotate counterclockwise and clockwise against the tension springs 81 and 109 respectively. When the second rotatable disc 162 rotates to a rotary angle of 180°, the partial gear 43 disengages from the first sector gear 45 and the pressure pin 53 is positioned at the horizontal part of cam face 63 as shown in Fig. 5c, the guide wall 47 having rotated to the position where it can abut against the second projection 107. In addition, a not-toothed portion 111 at the third sector gear 57 is provided in order to disengage the second sector gear 49 from the third sector gear 57 so as to prevent interference between the teeth when the pressure pin 53 is about to abut against the cam face 63.

Fig. 5d shows the condition in which the second rotatable disc 162 rotates at angle of 205° in the reproducing mode. In the state where the first arm 77 for leftward loading and first arm 95 for rightward loading are not turnable from the condition in Fig. 5c as abovementioned, the first loading gear 68 and third loading gear 75 have rotated counterclockwise and clockwise respectively, so that a gap $\Delta l$ is created between the pin 83 and the stopper 85 and similarly a gap $\Delta l'$ between the stopper at the first arm 95 and the pin at the third loading gear 75. In brief, the gaps $\Delta l$ and $\Delta l'$ are nothing but extensions of tension springs 81 and 108. A force corresponding to the extension biases the guide posts 23 and 27 toward the positioning members 184 and 185, thereby bringing the magnetic tape 180 into stable-contact along with a guide drum 186 housing the magnetic head. While, it is quite apparent that the biasing forces of tension springs 81 and 109 act as the reaction to tend to rotate the first loading gear 68 and third loading gear 75 clockwise and counterclockwise respectively. Hence, the fourth sector gear 65 and arm 98 are subjected to the counterclockwise rotating force, which is applied to the pressure pin 53 in the direction of the arrow A in Fig. 5d. The pressure pin 53, however, is positioned at the horizontal portion of cam face 63 and the line connecting the axes of pressure pin 53 and shaft 51 is identical with the arrow A direction, so that the rotating force is not effective for rotation of arm 55 and first sector gear 45, whereby the first sector gear 45 can be maintained in the condition of Fig. 5d in spite of existence of the reaction of the biasing force and the second rotatable disc 162 can continue to rotate clockwise while disengaging from the first sector gear without being affected by the reaction.

Next, explanation will be given on a relation between the movement of main rod 48 by rotation of second rotatable disc 162 and the movement of support members 182 and 183. When the second rotatable disc 162 rotates from the stopping mode in Fig. 3 clockwise at a rotary angle 60°, the main rod 48 follows the grooved cam 166 and moves rightwardly in Fig. 3 and by 1.5 mm as shown in the Fig. 11 cam chart, so that the bent portion 21 pushes the pin 46 at the press-contact lever 32 and the pinch roller 192 approaches the capstan 72. When the second rotatable disc 162 continues to rotate by a rotary angle of 180°, the main rod 48 further moves by about 2.5 mm and the pinch roller 192 contacts with the capstan 72, but no press-contact strength is generated. When the second rotatable disc 162 rotates at a rotary angle of 180° to 200°, the main rod 48 moves further rightwardly by about 2 mm so that the pinch roller 192 is brought into press-contact at the predetermined strength with the capstan 72 by the tension spring 44. In other words, it is apparent from the cam lift curve in Fig. 11 that a range of rotary angle necessary to apply the rotating force to the second rotatable disc 162 for press-contact of pinch roller 192 with the capstan 72 does not overlap with that necessary to apply the rotating force to the same for bringing the guide posts 23 and 27 into press-contact with the positioning members 184 and 185.

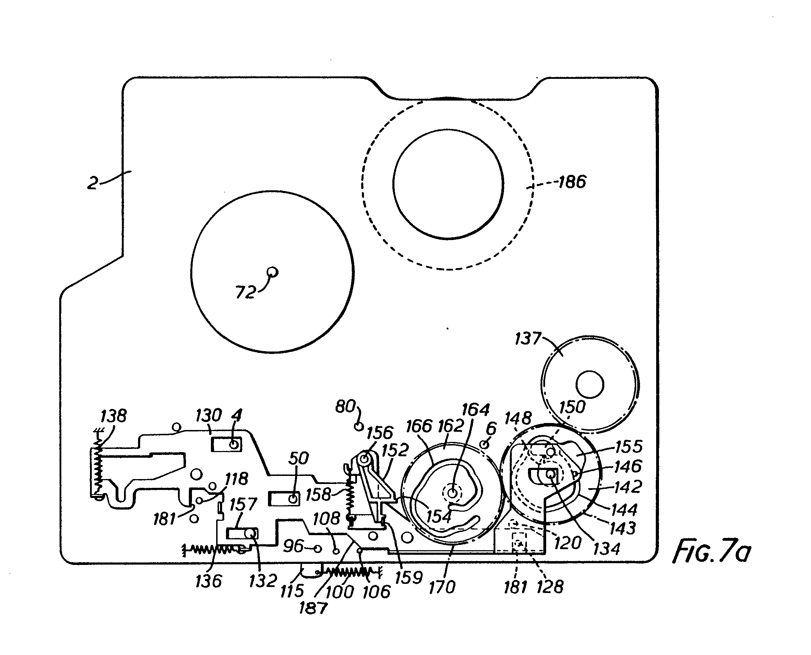

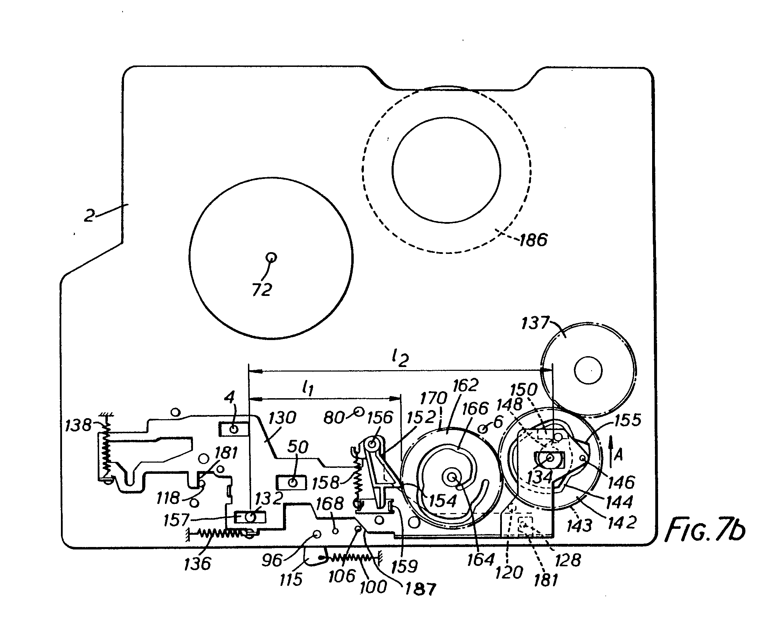

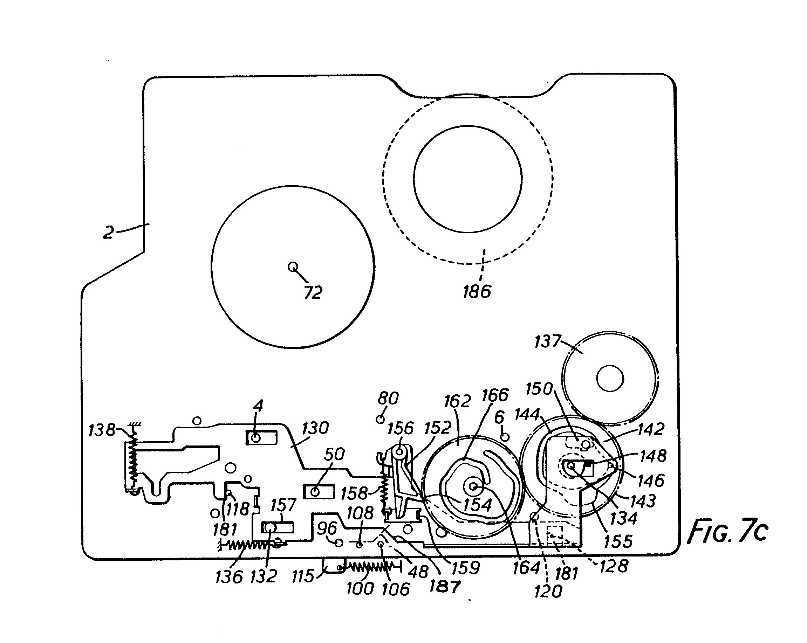

Next, explanation will be given on construction of the first rotatable disc 142 and sub-rod 130 at the rear of chassis 2 according to Figs. 7a through 7c and 8. Fig. 7a shows the stopping mode of the apparatus, in which the sub-rod 130 is guided by the take-up reel shaft 4 and take-up reel idler gear shaft 50 mounted on the chassis 2 and by shafts 132 and 134 mounted at the rear of chassis 2, biased leftwardly in Fig. 7a by a tension spring 136, and biased clockwise around the shaft 132 in Fig. 7a by a tension spring 138 because a slot 157 is smaller in width than other slots and about equal in width to a diameter of shaft 132. The first rotatable disc 142 is provided at the end face with a grooved cam 144 engageable with a cam follower 146 mounted on the sub-rod 130, and a claw 148 provided at the end face of first rotatable disc 142 abuts against a hook 150 fixed to the sub-rod 130, whereby the state of Fig. 7a is kept in spite of existence of the rotary biasing force of tension spring 138. A pawl lever 152 is fitted rotatably onto a shaft 156 mounted on the sub-rod 130 and biased counterclockwise in Fig. 7a by a tension spring 158 and abuts at the utmost end against a stopper 159 provided at the sub-rod 130 so as to be restricted in turning. When the first rotatable disc 142 rotates clockwise from the condition of Fig. 7a, the claw 148 engages with the hook 150 so that the sub-rod 130 is adapted to move rightwardly against the tension spring 136, the grooved cam 144 providing a relief space 155 for disengaging the cam follower 146 from the grooved cam 144. At this time, the pawl lever 152 moves rightwardly integrally with the sub-rod 130 to engage a pawl 154 with the toothed portion 170 at the second rotatable disc 162, thereby being in condition as shown in Fig. 7b. When the first rotatable disc 142 rotates counterclockwise from the condition in Fig. 7b, the toothed portion 170 biases the pawl 154 in the direction of the arrow A, whereby the sub-rod 130 turns in the direction of the arrow A around the shaft 132 against the biasing force of tension spring 138 and also a ratio of a distance $l_1$ between the shaft 132 and the pawl 154 to a distance $l_2$ between the shaft 132 and the hook 150 greatly enlarges the movement of pawl 154 as the movement of hook 150, thus immediately disengaging the claw 148 from the hook 150 to return the sub-rod 130 to the original position in Fig. 7a by the action of tension spring 136, at which time the relief space 155 at the grooved cam 144 receives therein the cam follower 146 not to hinder the sub-rod 130 from moving in the arrow A direction. As best seen from the cam chart of grooved cam 144 at the first rotatable disc 142 in Fig. 11, when the first rotatable disc 142 rotates from the stopping mode in Fig. 7a counterclockwise (in the direction of plus rotary angle), the sub-rod 130 moves rightwardly due to engagement of grooved cam 144 with cam follower 146, at which time the pawl 154 at pawl lever 152 moves toward the position where the pawl 154 can engage with the toothed portion 170 at the second disc 162, but the second rotatable disc 162, as shown in Fig. 8, is provided at the toothed portion 170 in part with a flange 168 slightly larger in outer diameter than the portion 170 so that, during the rotation from the stopping mode of first rotatable disc 142 to the counterclockwise rotation of Fig. 7a, the pawl 154 does not engage with the toothed portion 170.

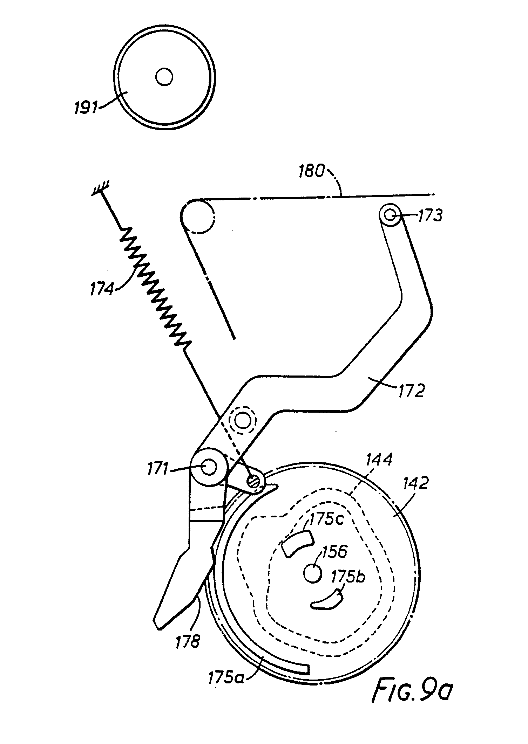

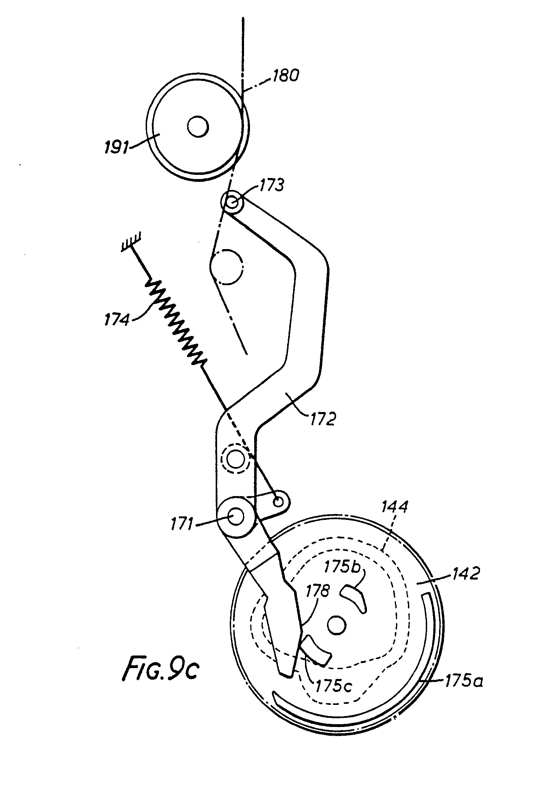

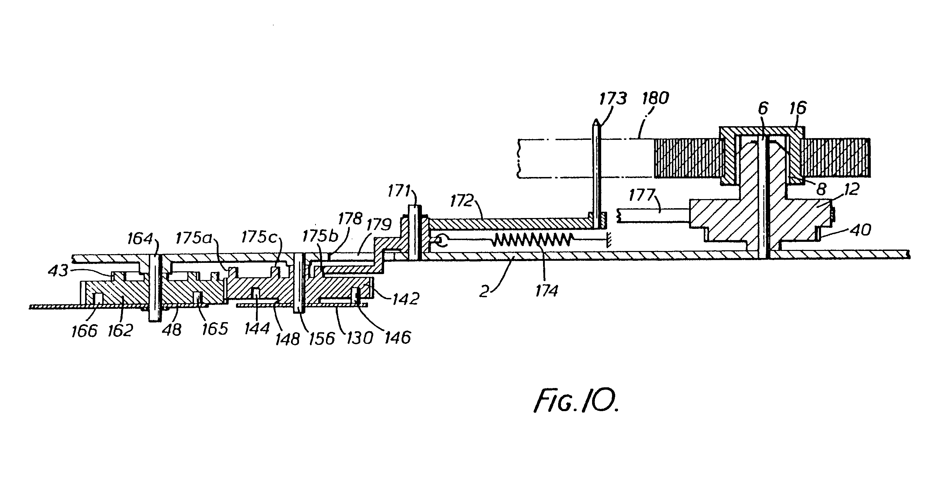

Referring to Fig. 1a, a shaft 171 mounted on the surface of chassis 2 rotatably supports a tension arm 172 having at one end a post 173, the tension arm 172 being biased counterclockwise in Fig. 1a by a tension spring 174 so that an end face 178 of arm 172 is bent toward the rear of chassis 2 and adapted to abut against a first cam face 175a, second cam face 175b, or third cam face 175c (shown in Figs. 9a through 10) at the opposite side of first rotatable disc 142 to the grooved cam 144 corresponding to the operating mode through an opening 179 provided at the chassis 2. Also, a first band fastener 176a is mounted rotatably to the tension arm 172 and a second band fastener 176b is fixed to the chassis 2, the first and second band fasteners 176a and 176b connecting a band 177 winding the supply reel turntable 12. In the state where the first rotatable disc 142 is at a rotary angle of 0° in Fig. 11, that is, in the stopping mode as shown in Figs. 1a and 9a, the tension arm 172 abuts at its end face 178 against the first cam face 175a to be restricted from rotating counterclockwise, thereby positioning the post 173 at the opening 19 of cassette 20.

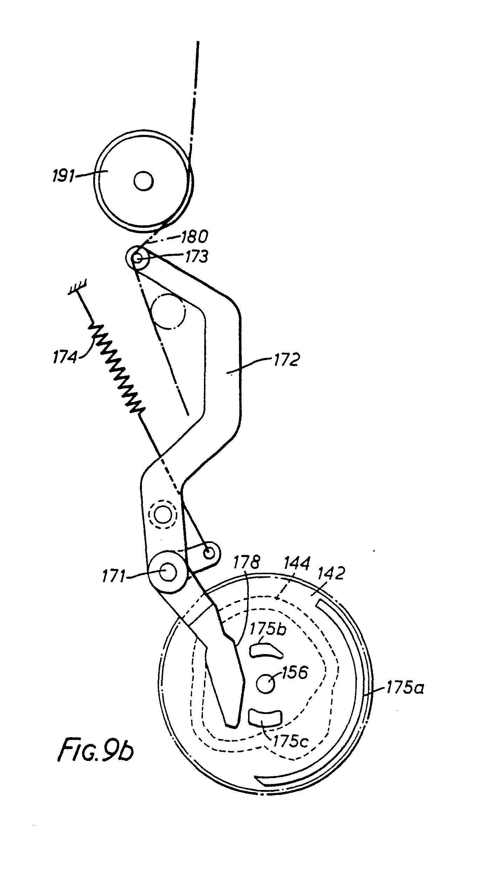

Thereafter, the first rotatable disc 142 starts to rotate clockwise in Fig. 9a, i.e., in the direction of plus rotary angle in Fig. 11, at which time the tension arm 172 abuts against the first cam face 175a to be kept in condition shown in Fig. 1a. While, the second rotatable disc 162, as shown in Fig. 11, operates to move the support members 182 and 183 in a range of rotary angle of 40 to 180° from the stopping mode, in which even when the support members 182 and 183 move from the positions in Fig. 1a and the tension arm 172 rotates counterclockwise, the arm 172 later starts to rotate counterclockwise not to contact with the support member 182. In other words, when the first rotatable disc 142, as shown in Fig. 11, rotates to a rotary angle of 150°, the end face 178 of arm 172 leaves the first cam face 175a and turns largely counterclockwise to begin to abut against the second cam face 175b. Further, when the first disc 142 rotates at a rotary angle of 190°, since the band 177 is stretched along the supply reel turntable 12, the tension arm 172 is restricted from further counterclockwise rotation so that the end face 178 also leaves the second cam face 175b. The state where the first rotatable disc 142 continuously rotates to a rotary angle of 205°, is shown in Figs. 1b and 9b, in which the end face 178 completely leaves all the cam faces 175a, 175b and 175c to be in the reproducing mode, at which time, as well-known, the balance between the spring force of tension spring 174 and the tension of a magnetic tape 180 stretched along the post 173, allows the braking effect by the band 177 on the supply reel turntable 12 to change, thereby controlling the tension of magnetic tape 180 at the predetermined value.

Also, in a case of rotating the supply reel turntable 12 counterclockwise in condition of Fig. 1b, a large rotating force, as well-known, is required because the braking action by the tension spring 174 and band 177, is exerted in the direction of bite.

Therefore, in a case where the magnetic tape, while being wound on a guide drum 186, is wound on the supply reel turntable 12 as, for example a fast reviewing mode, the tension arm 172 is rotated clockwise in Fig. 1b and the band 177 is slackened as in Fig. 1c so that the supply reel turntable 12 should not be subjected the braking effect. In this embodiment the first rotatable disc 142 is rotated further at a rotary angle of 250°, the end face 178 abuts against the third cam face 175c as shown in Fig. 9c, and the tension arm 172 rotates clockwise to allow the post 173 to disengage approximately from the magnetic tape 180, thereby reducing a winding angle of tape 180 with respect to a tape guide 191 carrying the tape 180.

Next, explanation will be given on operation of the apparatus. In the stopping mode in Fig. 1a, a reproduction button (not shown) is pushed to start the motor 121, by which the drive gear 137 rotates clockwise in Fig. 3, so that the first rotatable disc 142 rotates counterclockwise. The cam follower 146 moves along the grooved cam 144 in engagement therewith, and the sub-rod 130, at a rotary angle of 40° of first disc 142 as shown in Fig. 11, moves rightwardly by 3 mm in Fig. 7a to move the brakes 112 and 113 away from the reel turntables 10 and 12 respectively, at which time the second rotatable disc 162 also has rotated at an angle of 40° and the partial gear 43 and first sector gear 45 start to engage with each other to move the support members 182 and 183 at about uniform speed, thereby beginning to draw the magnetic tape 180 out of the cassette 20. At the same time, the main rod 48 also follows the grooved cam 144 to begin rightward movement in Fig. 3 and the pitch roller 192 approaches the capstan 72. The second rotatable disc 162 continues to rotate until a rotary angle of 160° so that the second sector gear 49 disengages from the third sector gear 57 and the pressure pin 53 abuts against the cam face 63 and the guide posts 23 and 27 abut against the positioning members 184 and 185 respectively. Further, when the second rotatable disc 162 rotates by 180°, the pressure pin 53 slidably moves along the cam face 63 to bring the guide posts 23 and 27 into press-contact with the positioning members 184 and 185 respectively, at which time if a pressure angle of cam face 63 with respect to the pressure pin 53 is made as small as possible, the guide posts 23 and 27 apparently come into press-contact with the positioning members 184 and 185 with less torque required of the motor 121. At this time, since the second rotatable disc 162 has rotated 180°, the main rod 48, as shown in Fig. 11, moves rightwardly by about 4 mm in Fig. 3, whereby the pinch roller 192 starts to abut against the capstan 72. Furthermore, the second rotatable disc 162 rotates to an angle of 200° to move the main rod 48 rightwardly by 6 mm in Fig. 3, so that the pinch roller 192 completes the predetermined press-contact with the capstan 72. In this press-contact, the partial gear 43 at the second rotatable disc 162 disengages form the first sector gear 45, whereby the second rotatable disc 162 apparently rotates without being subjected to the reaction to press-contact of guide pins 23 and 27 to the positioning members 184 and 185.

On the other hand, the end face 178 of tension arm 172 changes its abutting against the second cam face 175b from against the first cam face 175a by rotation of first rotatable disc 142 at a rotary angle of 150°, so that the tension arm 172 largely rotates counterclockwise in Fig. 1a, but since the end face 178 still abuts against the second cam face 175b, the post 173 never impacts the magnetic tape 180 in spite of existence the counterclockwise biasing force of tension spring 174.

Next, when the first rotatable disc 142 rotates at a rotary angle of 190°, the end face 178 of tension arm 172 leaves the second cam face 175b so that the post 173 moves to the position where it is completely contactable with the tape 180. Then, the disc 142 continues rotation to the rotary angle of 205° and a switch (not shown) operates to stop the motor 121 first rotatable disc 142 and second rotatable disc 162.

At this time, the capstan 72 rotates clockwise in Fig. 1b and the main idler 76 is rotated counterclockwise. Accordingly, the belt 84, relay roller 82, and rotary arm 88, rotate counterclockwise and the idler gear 86 rotating clockwise engages with the take-up reel idler gear 54a, so that the take-up reel turntable 10 becomes to rotate clockwise. Hence, the magnetic tape 180 transported at constant speed by cooperation of pinch roller 192 with capstan 72 is wound onto the take-up reel hub 14 without being slackened, and the tension arm 172 as abovementioned rotates to the predetermined position, thereby making the reproducing mode in Fig. 1b, in which the magnetic tape 180 discharged from the supply reel hub 14 is controlled of its tension to be constant.

At this time, the idler tire 102, as shown in Fig. 1b, keeps its position apart from both the take-up reel idler gear unit 52 and supply reel idler gear unit 62 because the pin 108 is urged by the main rod 48.

Next, when a fast reviewing button (not shown) is pushed in the above condition, the first and second rotatable discs 142 and 162 rotate further at angle of 250° by the motor 121, at which time the main rod 48 does not move so that the pinch roller 192, as shown in Fig. 1c, is kept in the predetermined press-contact with the capstan 72 and the tension arm 172, as shown in Fig. 9c, abuts against the third cam face 175c and rotates to the position shown in Fig. 1c, at which time the capstan 72 rotates counterclockwise at high speed, whereby the magnetic tape 180 discharged by cooperation with the pinch roller 192 is wound onto the supply reel hub 14 in engagement with the supply reel turntable 12 rotated counterclockwise. Since the post 173 at tension arm 172 disengages approximately from the tape 180 and the winding angle of tape 180 with respect to the tape guide 191 decreases, the magnetic tape 180 during the transportation is less in frictional loss, thereby obtaining the stable tape transportation by less take-up torque.

Also, at this time, the pawl 154 at the pawl lever 152 is positioned to abut against the outer periphery of second rotatable disc 162 as shown in Fig. 7c, but becomes to abut against the flange 168 provided at the outer periphery of second rotatable disc 162 as shown in Fig. 8, thereby not engaging with the toothed portion 170, thus being subjected to no excessive force.

Also, the mechanism condition of the apparatus in the recording mode is quite the same as that in the reproducing mode shown in Fig. 1b. When a record pausing button (not shown) is pushed for pausing the tape transportation from the recording mode and for bringing the recording to a halt, the first and second rotatable discs 142 and 162, as shown in Fig. 11, rotate to the rotary angle of 300° respectively. Therefore, the sub-rod 130 is positioned as the same as the stopping mode and both the brakes 112 and 113 reliably abut against both the reel turntables 10 and 12, so that even when the apparatus is subjected to vibrations or the like, there is no fear that the reel turntables 10 and 12 rotate to slacken the tape 180 to lead to a damage thereon. Also, at this time, the main rod 48, as shown in Fig. 11, moves to move the pinch roller 192 away from the capstan 72 to thereby stop the tape 180 transportation, such operation necessary for the record pausing mode of course being performed. Also, since the first rotatable disc 142 rotates clockwise at an angle of 50° from the condition of Fig. 9c, the tension arm 172 rotates clockwise because the end face 178 thereof abuts against the third cam face 175c, the third cam face 175c being determined to allow the post 173 to completely leave the magnetic tape 180.

Next, when a stop button (not shown) is pushed, the drive gear 137 reversely rotates by the motor 121 and passes the position corresponding to the reproduction mode, and thereafter the tension arm 172, while abutting at the end face 178 thereof against the second cam face 175b and first cam face 175a, is turned largely clockwise in Fig. 1b against the biasing force of tension spring 174. Then, the support members 182 and 183 move toward the cassette 20 and the pinch roller 192 moves away from the capstan 72, the capstan 72 rotating counterclockwise in Fig. 1b, the idler gear 86 engaging with the supply reel idler gear 64a to rotate the supply reel turntable 12 counterclockwise, thereby winding the discharged tape 180 onto the supply reel hub 16 without slackening the tape. When the first and second rotatable discs 142 and 162 continue rotation until the rotary angle of 0°, the switch (not shown) works to stop the motor and the capstan 72, thus putting the apparatus in the stopping mode shown in Fig. 1a.

Thus, the tension arm 172 uses one surface of first rotatable disc 142 to associate with rotations of first and second rotatable discs 142 and 162 for changing the operation mode of the apparatus, thereby enabling the accurate synchronism with movements of other members. The configurations of cam faces 175a, 175b and 175c not only can rotate largely with a small rotary angle of first disc 142 and minutely with a relatively larger rotary angle, but also can change the moving speed at need even with constant speed of the discs, thereby making it possible to control the tape 180 transportation smoothly and stably even when the complex operation mode changes for multi-functions.

On the other hand, when a fast-forward-winding button (not shown) is pushed in the stopping mode of Fig. 1a, the capstan 72 rotates clockwise in Fig. 1a, so that the main idler 76 rotates counterclockwise, and the belt 84 and relay roller 82 also rotate counterclockwise, the motor 121 rotating the first rotatable disc 142 clockwise in Fig. 7a. Hence, the claw 148 engages with the hook 150, and the first rotatable disc 142, as shown in Fig. 11, rotates at an angle of −35° to move the sub-rod 130 rightwardly by 3 mm in Fig. 7a, thereby making the fast-forward-winding mode.

Since the shaft 106 mounted on the lever 115 and extending toward the rear of chassis 2 disengages from the sub-rod 130, the tension spring 100 moves the idler tire 102 to the position where it abuts against the rear surface of belt 84. While, the belt 84 rotating counterclockwise in Fig. 1a allows the relay lever 104 to rotate clockwise in Fig. 1a around the shaft 106 so that the idler tire 102 rotatably contact between the belt 84 and the roller portion 59 at the take-up reel idler gear unit 52 to thereby rotate the take-up reel turntable 10 counterclockwise in Fig. 1a at high speed. Simul-

taneously, the brake kick portions 181 at the sub-rod 130 urge and move the kick-pins 118 and 128 rightwardly as shown in Fig. 7b, the kick-pins 118 and 128 mounted on both the brakes 112 and 113 and extending toward the rear of chassis 2. Hence, the reel turntables 10 and 12 are released from the braking effect so as to be in the fast-forward-winding mode.

At this time, the pawl 154 at the pawl lever 152 is positioned in engagement with the toothed portion 170 of second rotatable disc 162, in which the disc 162 rotates counterclockwise in Fig. 7b and the pawl lever 152 is directed to free relief, thereby not being subjected to an excessive force.

Next, in the aforesaid fast-forward-winding mode, for example, when an optically transparent tape is detected to generate a termination detecting signal, the motor 121 rotates the drive gear 137 clockwise in Fig. 7b, whereby the first rotatable disc 142 rotates counterclockwise and the second rotatable disc 162 rotates clockwise, at which time the pawl 154 at pawl lever 152 enters into the toothed portion 170 so as to be urged in the direction of the arrow A, whereby the claw 148 disengages from the hook 150 and the biasing force of tension spring 136 instantaneously returns the sub-rod 130 to the condition of Fig. 7a. A slope 187 urges the shaft 106 to rotate the lever 115 clockwise in Fig. 7b, so that the idler tire 102 returns to the condition in Fig. 1a, the take-up reel turntable 10 stops its rotation, and simultaneously the brake-kick portion 181 disengage from the kick-pins 118 and 128 to be in the state shown in Fig. 7a, thereby instantaneously applying the braking effect to both the reel turntables 10 and 12. Furthermore, when the first rotatable disc 142 rotates clockwise in Fig. 7b and the claw 148 and hook 150, as shown in Fig. 7a, rotate under the biasing force of tension spring 138 to the position where both the members 148 and 150 become reengageable, the stop switch (not shown) is on to stop the motor 121 and capstan 72. The rewinding operation is almost the same as the aforesaid fast-forward-winding operation except for reverse rotation of capstan 72 and driven rotation of supply reel turntable 12, thereby being omitted of explanation herewith.

As seen from the above explanation on operation and Fig. 11, in the apparatus of the invention, the partial gear 43 integral with the second rotatable disc 162 and the first sector gear 45 are completely separate from each other for changing the operation modes, such as the fast-foward-winding, rewinding, reproducing, recording, fast cueing, or recording pausing mode, across the rotary range of first and second rotatable discs 142 and 162 corresponding to operation of drawing or housing the magnetic tape 180 out of or within the cassette 20 by use of support members 182 and 183, thereby performing the change of operation mode smoothly and at a light load, in which the motor 121 need only provide a smaller driving force.

Also, the operation of changing from the fast-forward-winding mode to the stopping mode is quick in spite of using the motor for changing the operation mode so that the instant braking action is possible to ensure the braking action from the tape end detection, resulting in that the trouble of applying excessive tension to the tape when its end enters, is eliminated. Also, in the modes other than the fast-forward-winding mode, the grooved cam 144 actuates the sub-rod 130, thereby readily and reliably setting the timing on operation for other members, and the stroke on operation is ensured, thereby largely improving the reliability for switching the braking action. Furthermore, the engagement of claw 148 at the first rotatable disc 142 with the hook 150 at the brake control member is utilized to move the sub-rod 130 so that a large amount of movement of sub-rod 130 can be ensured even with a smaller rotary angle by setting a radius of rotation of claw 148, thereby largely improving the reliability for the braking action and the degree of freedom for the design.

## Claims

1. A magnetic tape recording and/or reproducing apparatus for recording and/or reproducing signals on a magnetic tape wound on reels (14, 16) contained in a tape cassette (20) and having a plurality of operating modes, comprising: means (186) for recording and/or reproducing signals on/ from said magnetic tape moving in a specific tape path outside of said tape cassette (20); a motor (121); a pair of reel drive turntables (10, 12) engageable with said reels (14, 16) for rotating said reels; loading means (182, 183) for moving from an inoperative position to an operative position to draw said magnetic tape (180) out of said tape cassette (20) and load said magnetic tape in said specific tape path, and for returning from said operative position to said inoperative position; operating mode changing means having at least one rotatable disc (142, 162) driven by said motor (121) for rotating to a plurality of positions to change the operating mode of said apparatus to said plurality of operating modes corresponding to said plurality of positions; resilient means (81, 109) exerting a force on said loading means (182, 183) to urge said loading means firmly into said operative position, said resilient means producing an opposite reaction force to the force exerting on said loading means; and driving means (45, 49, 55, 53, 57, 63, 65, 98, 68, 71, 75, 77, 87, 95, 99) engageable with said rotatable disc (162) and engaged with said loading means for moving said loading means between said inoperative and operative positions, said driving means normally transmitting said opposite reaction force produced by said resilient means to said rotatable disc,

characterized in that said motor (121) is a reversible motor rotatable in a first direction and a second direction reverse to the first direction, and said loading means (182, 183) is driven by the first direction rotation of said motor for moving from said inoperative position to said operative position and driven by the second direction rotation of said motor for moving from said operative position to said inoperative position, and

that said apparatus further comprises locking means (55, 98) for locking, when said driving means is in a position corresponding to said operative position of said loading means, said driving means so that said opposite reaction force is not transmitted to said rotatable disc and so that said rotatable disc is rotatable to perform the operating mode changing operation without being affected by said opposite reaction force.

2. An apparatus according to claim 1, wherein said driving means comprises gear means (45, 49, 57, 65, 68, 71, 75) driven by said rotatable disc for driving said loading means from said inoperative position to said operative position, and wherein said locking means comprises cam means (53, 63) for locking said gear means when said loading means is in said operative position.

3. An apparatus according to claim 1, further comprising: a first cam member (144) and a claw member (148) which are provided on said rotatable disc; brake means (112, 113) for braking said reel drive turntables; a brake control member (130) connected to said brake means and having thereon a cam follower (146) engaged with said first cam member for being moved between a first position where said brake means acts to brake said reel drive turntables and a second position where said reel drive turntables are released from said brake means by rotation of said rotatable disc which is rotatable in a first direction and a second direction reverse to the first direction, said cam follower moving said brake control member from said first position to said second position during the second-direction rotation of said rotatable disc; spring means (136) connected to said brake control member for urging said brake control member toward said first position; a hook member (150) fixed on said brake control member and engageable with said claw member for moving said brake control member from said first position to said second position during the first-direction rotation of said rotatable disc; and release means (152, 158) for disengaging said hook member from said claw member during the second-direction rotation of said rotatable disc thereby to allow said brake control member to be quickly returned from said second position to said first position due to the action of said spring means.

4. An apparatus according to claim 1, further comprising: a first cam (144) provided on said rotatable disc; a cam follower (146) engaged with said first cam for being moved by rotation of said rotatable disc to a plurality of positions to change the operating mode of said apparatus to said plurality of operating modes corresponding to said plurality of positions of said cam follower; a tension detecting means (171, 172, 173, 174, 178) having a rotatable arm (172) and being engaged with said magnetic tape (180) for detecting the tension of said magnetic tape; and a second cam (175a, 175b, 175c) provided on said rotatable disc and engageable with said rotatable arm for disengaging said tension detecting means from said magnetic tape.

5. An apparatus according to claim 1, further comprising: housing means (131) connected axially to said motor and having a radial outward opening (133); an reducing means (122) built in said housing for reducing rotation of said motor and transmitting the reduced rotation to said rotatable disc through said opening.

6. An apparatus according to claim 5, wherein said rotatable disc has a first spur gear (143), and said reducing means has a second spur gear (141) which engages with said first spur gear, the axis of rotation of said first spur gear being parallel to the axis of rotation of said second spur gear.

**Patentansprüche**

1. Magnetisches Bandaufzeichnungs- und/oder Wiedergabegerät zum Aufzeichnen und/oder Wiedergeben von Signalen auf bzw. von einem Magnetband, das auf in einer Bandkassette (20) enthaltenen Spulen (14, 16) aufgewickelt ist, in mehreren Arbeitsweisen, enthaltend: Hilfsmittel (186) zum Aufzeichnen und/oder Wiedergeben von Signalen auf/von dem Magnetband, das sich auf einer speziellen, für das Band vorgesehenen Bahn außerhalb der Bandkassette (20) bewegt, einen Motor (121), zwei Drehscheiben (10, 12) zum Spulenantrieb, die zur Drehung der Spulen mit den Spulen (14, 16) einschaltbar sind, Lademittel (182, 183) zum Bewegen aus einer Wartestellung in eine Arbeitsstellung, um das Magnetband (180) aus der Bandkassette (20) zu ziehen und es in die spezielle, für das Band vorgesehene Bahn zu bringen, und zur Rückkehr aus der Arbeitsstellung in die Wartestellung, ein die Arbeitsweise abänderndes Hilfsmittel mit mindestens einer drehbaren Scheibe (142, 162), die zur Drehung in mehrere Lagen vom Motor (121) angetrieben wird, um die Arbeitsweise des Gerätes in Übereinstimmung mit diesen Lagen mehrfach abzuändern, federnde Hilfsmittel (81, 109), die eine Kraft auf die Lademittel (182, 183) ausüben, um die Lademittel fest in die Arbeitsstellung zu drängen, und die eine Reaktionskraft erzeugen, die zu der auf die Lademittel wirkenden Kraft entgegengesetzt ist, und Antriebsmittel (45, 49, 55, 53, 57, 63, 65, 98, 68, 71, 75, 77, 87, 95, 99), die mit der drehbaren Scheibe (162) antreibbar sind und mit den Lademitteln zu deren Bewegung zwischen den Werte- und Arbeitsstellungen in Eingriff stehen, sowie normalerweise die entgegengesetzte, von den federnden Hilfsmitteln erzeugte Reaktionskraft auf die drehbare Scheibe übertragen,

dadurch gekennzeichnet, daß der Motor (121) ein Umkehrmotor ist, der in einer ersten Richtung und in einer zweiten zur ersten Richtung umgekehrten Richtung drehbar ist, und die Lademittel (182, 183) von der Motordrehung in der ersten Richtung zur Bewegung von der Wartestellung in die Arbeitsstellung und von der Motordrehung in der zweiten Richtung von der Arbeitsstellung aus in die Wartestellung angetrieben werden, und

daß das Gerät ferner eine Sperre (55, 98) zum Sperren der Antriebsmittel enthält, wenn sich diese in einer mit der Arbeitsstellung der Lademittel übereinstimmenden Lage befinden, so daß die entgegengesetzte Reaktionskraft nicht auf die drehbare Scheibe übertragen wird und die drehbare Scheibe zur Abänderung der Arbeitsweise drehbar ist, ohne von der entgegengesetzten Reaktionskraft beeinflußt zu werden.

2. Gerät gemäß Ansrpuch 1, bei dem die Antriebsmittel von der drehbaren Scheibe getriebene Zahnkränze (45, 49, 57, 65, 68, 71, 75) zum Antrieb der Lademittel von der Wartestellung aus in die Arbeitsstellung enthalten, und bei dem die Sperre Führungsmittel (53, 63) zum Sperren der Zahnkränze enthält, wenn sich die Lademittel in der Arbeitsstellung befinden.

3. Gerät gemäß Anspruch 1, bei dem ferner ein erstes Führungsteil (144) und ein Hakenteil (148) an der drehbaren Scheibe, Bremsmittel (112, 113) zum Abbremsen der die Spulen antreibenden Drehscheiben, ein mit den Bremsmitteln verbundenes Bremssteuerglied (130), auf dem ein Nockenstößel (146) mit dem ersten Führungsteil in Eingriff steht, um zwischen einer ersten Lage, in dem die Bremsmittel zum Abbremsen der die Spulen antreibenden Drehscheiben wirksam sind, und einer zweiten Lage bewegt zu werden, in der die die Spulen antreibenden Drehscheiben von den Bremsmitteln durch eine Drehung der drehbaren Scheibefreigegeben werden, die in einer ersten Richtung und einer zu der ersten Richtung umgekehrten zweiten Richtung drehbar ist, so daß während der Drehung der drehbaren Scheibe in der zweiten Richtung der Nockenstößel das Bremssteuerglied aus der ersten Lage in die zweite Lage bewegt, Federn (136), die mit dem Bremssteuerteil verbunden sind, um diesen in Richtung der ersten Lage zu drängen, ein an dem Bremssteuerteil befestigter Haken (150), der in den Hakenteil hineingreifbar ist, um den Bremssteuerteil während der Drehung der drehbaren Scheibe in der ersten Richtung von der ersten Lage in die zweite Lage zu bewegen, und Freigabemittel (152, 158) zur Ablösung des Hakens vom Hakenteil während der Drehung der drehbaren Scheibe in der zweiten Richtung vorgesehen sind, um dem Bremssteuerteil eine schnelle Rückkehr mit Wirkung der Federn aus der zweiten Lage in die erste Lage zu ermöglichen.

4. Gerät gemäß Anspruch 1, das ferner ein erstes Führungsteil (144) auf der drehbaren Scheibe, einen an dem ersten Führungsteil in Eingriff zu bringenden Führungsstößel (146), der durch eine Drehung der drehbaren Scheibe in mehrere Lagen zur mehrfachen Abänderung der Arbeitsweise des Gerätes in Übereinstimmung mit seinen Lagen zu bewegen ist, einen Spannungsfühler (171, 172, 173, 174, 178) mit einem drehbaren Arm (172), der mit dem Magnetband (180) zur Abfühlung von dessen Spannung in Berührung steht, und einen zweiten an der drehbaren Scheibe vorgesehenen Führungsteil (175a, 175b, 175c) enthält, der zur Ablösung des Spannungsfühlers vom Magnetband mit dem drehbaren Arm zum Eingriff einstellbar ist.

5. Gerät gemäß Anspruch 1, das ferner ein mit dem Motor axial in Verbindung stehendes Gehäuse (131) mit einer radial nach außen führenden Öffnung (133) und in dem Gehäuse eingebaute Reduzier-Hilfsmittel (122) enthält, um die Drehung des Motors zu reduzieren und die verminderte Drehung der drehbaren Scheibe durch die Öffnung zu übertragen.

6. Gerät gemäß Anspruch 5, bei dem die drehbare Scheibe ein erstes Stirnrad (143) aufweist und die Reduzier-Hilfsmittel ein zweites Stirnrad (41) aufweisen, das in das erste Stirnrad eingreift, wobei die Drehachse des ersten Stirnrades parallel zur Drehachse des zweiten Stirnrades ist.

**Revendications**

1. Appareil d'enregistrement et/ou de lecture à bande magnétique, destiné à enregistrer et/ou lire des signaux portés par une bande magnétique enroulée sur des bobines (14, 16) contenues dans une cassette (20) de bande et ayant plusieurs modes de fonctionnement, comprenant un dispositif (186) d'enregistrement de signaux sur la bande magnétique et/ou de lecture de signaux de la bande magnétique qui se déplace suivant un trajet particulier à l'extérieur de la cassette (20) de bande, un moteur (121), deux plateaux tournants (10, 12) d'entraînement de bobine destinés à coopérer avec les bobines (14, 16) afin que celles-ci soient entraînées en rotation, un dispositif (182, 183) de chargement destiné à se déplacer d'une position de repos à une position de travail afin que la bande magnétique (180) soit extraite de la cassette (20) et que la bande magnétique soit chargée sur ledit trajet particulier, et destiné à revenir de la position de travail à la position de repos, un dispositif de changement de mode de fonctionnement, ayant au moins un disque rotatif (142, 162) entraîné par le moteur (121) et destiné à tourner vers plusieurs positions afin que le mode de fonctionnement de l'appareil soit mis à l'un de plusieurs modes de fonctionnement correspondant aux différentes positions, un dispositif élastique (81, 109) exerçant une force sur le dispositif de chargement (182, 183) afin que le dispositif de chargement soit fermement repoussé en position de travail, le dispositif élastique créant une force de réaction opposée à la force agissant sur le dispositif de chargement, et un dispositif d'entraînement (45, 49, 55, 53, 57, 63, 65, 98, 68, 71, 75, 77, 87, 95, 99) destiné à coopérer avec le disque rotatif (162) et coopérant avec le dispositif de chargement afin qu'il déplace ce dispositif de chargement entre ses positions de repos et de travail, le dispositif d'entraînement transmettant normalement la force de réaction de sens opposé créée par le dispositif élastique au disque rotatif,

caractérisé en ce que le moteur (121) est un moteur réversible qui peut tourner dans un premier sens et dans un second sens inverse du premier, et le dispositif de chargement (182, 183) est entraîné lors la rotation du moteur dans le premier sens afin qu'il passe de la position de repos à la position de travail, et est entraîné par le moteur lors de sa rotation dans le second sens afin qu'il passe de sa position du travail à sa position de repos, et

l'appareil comporte en outre un dispositif de verouillage (55, 98) destiné, lorsque le dispositif d'entraînement est en position correspondant à la position de travail du dispositif de chargement, à verrouiller le dispositif d'entraînement de manière que la force de réaction de sens opposé ne soit pas transmise au disque rotatif et de manière que le disque rotatif puisse tourner afin qu'il assure l'opération de changement du mode de fonctionnement, sans être affecté par la force de réaction de sens opposé.

2. Appareil selon la revendication 1, dans lequel le dispositif d'entraînement comporte des dispositifs à pignon (45, 49, 57, 65, 68, 71, 75) entraînés par le disque rotatif et destinés à entraîner le dispositif de chargement de la position de repos à la position de travail, et dans lequel le dispositif de verrouillage comporte un dispositif à came (53, 63) destiné à verrouiller le dispositif à pignon lorsque le dispositif de chargement est dans sa position de travail.

3. Appareil selon la revendication 1, comprenant en outre un premier organe de came (144) et un organe à griffe (148) qui sont disposés sur le disque rotatif, un dispositif (112, 113) de freinage des plateaux tournants d'entraînement des bobines, un organe (130) de commande de frein raccordé au dispositif de freinage et portant un toucheau de came (146) qui coopère avec le premier organe de came afin qu'il soit déplacé entre une première position dans laquelle le dispositif de freinage assure le freinage des plateaux tournants d'entraînement de bobine et une seconde position dans laquelle les plateaux tournants d'entraînement des bobines sont dégagés du dispositif de freinage, par rotation du disque rotatif qui peut tourner dans un premier sens et dans un sens opposé au premier, le toucheau de came déplaçant l'organe de commande de freinage de la première position à la seconde position pendant la rotation du disque rotatif dans le second sens, un dispositif à ressort (136) raccordé à l'organe de commande de freinage et destiné à rappeler l'organe de commande de freinage vers la première position, un organe à crochet (150) fixé à l'organe de commande de freinage et destiné à coopérer avec l'organe à griffe de manière qu'il déplace l'organe de commande de freinage de la première position à la seconde position pendant la rotation dans le premier sens du disque rotatif, et un dispositif (152, 158) destiné à libérer l'organe à crochet de l'organe à griffe pendant la rotation du disque rotatif dans le second sens afin que l'organe de commande de freinage puisse revenir rapidement de la seconde position à la première position sous l'action du dispositif à ressort.

4. Appareil selon la revendication 1, comprenant en outre une première came (144) disposée sur le disque rotatif, un toucheau de came (146), coopérant avec la première came afin qu'il soit déplacé par rotation du disque rotatif vers plusieurs positions en assurant le changement du mode de fonctionnement de l'appareil à l'un de plusieurs modes de fonctionnement correspondant aux diverses positions du toucheau de came, un dispositif (171, 172, 173, 174, 178) de détection de tension ayant un bras rotatif (172) et coopérant avec la bande magnétique (180) afin qu'il détecte la tension de cette bande, et une seconde came (175a, 175b, 175c) disposée sur le disque rotatif et destinée à coopérer avec le bras rotatif afin que le dispositif de détection de tension soit séparé de la bande magnétique.

5. Appareil selon la revendication 1, comprenant en outre un boîtier (131) raccordé axialement au moteur et ayant une ouverture radiale (133) débouchant vers l'extérieur, et un dispositif réducteur (122) incorporé dans le boîtier et destiné à réduire la vitesse de rotation du moteur et à transmettre la vitesse réduite au disque rotatif par l'intermédiaire de l'ouverture.

6. Appareil selon la revendication 5, dans lequel le disque rotatif a un premier pignon droit (143), et le dispositif réducteur a un second pignon droit (141) qui est en prise avec le premier pignon droit, l'axe de rotation du premier pignon droit étant parallèle à l'axe de rotation du second pignon droit.

Fig.1a

EP 0 087 952 B1

FIG. 1b

EP 0 087 952 B1

FIG. 1c

3

FIG. 2.

FIG.3.

FIG.4.

EP 0 087 952 B1

FIG.5a

7

Fig.5b

FIG.5c

9

EP 0 087 952 B1

Fig. 5d

FIG.6.

FIG.8.

EP 0 087 952 B1

Fig. 7a

*FIG. 7b*

FIG. 7c

FiG.9a

EP 0 087 952 B1

Fig.9b

Fig.9c

Fig. 10.

Fig.II.

DEGREE OF THE SECOND ROTATABLE DISC 162 ROTATION

DEGREE OF THE FIRST ROTATABLE DISC 142 ROTATION

AMOUNT OF GROOVED CAM 166

AMOUNT OF GROOVED CAM 144

−85°  −35°  0°  40°  150°  160° 180°  190°  205° 225° 250°  300°

RECORD PAUSING MODE

RECORD/ REPRODUCING MODE

FAST REVIEWING MODE

FAST-FORWARD− WINDING MODE

STOPPING MODE